# EUROPEAN PATENT APPLICATION

(11) **EP 3 382 389 A1**
(43) Date of publication of application: **03.10.2018**
(21) Application number: 18164679.5
(22) Date of filing: 28.03.2018
(51) Int. Cl.: G01N 30/24, G01N 30/88

(54) **LIQUID CHROMATOGRAPH APPARATUS**

(30) Priority: 31.03.2017 JP 2017070076
(71) Applicant: Hitachi High-Tech Science Corporation, Tokyo 105-0003 (JP)
(72) Inventor: NARIMATSU, Ikuko, Tokyo, 105-0003 (JP); ITO, Masahito, Tokyo, 105-0003 (JP)
(74) Representative: Miller Sturt Kenyon

(57) **Abstract**

A liquid chromatograph apparatus being unitary, enables to measure two or more varieties of measurement samples. The liquid chromatograph apparatus comprises a single sample solution injection portion configured to inject a sample solution containing the measurement samples, a single liquid delivering system configured to deliver the injected sample solution, at least one measurement element out of an eluent tank, a separation column, and a detector, which configures a set of elements separately provided for each of the measurement samples, and a flow path switching portion configured to selectively connect the liquid delivering system with one element of the measurement element to be capable of delivering the sample solution.

## Description

### BACKGROUND

### 1. Field of the Invention

The present disclosure relates to a liquid chromatograph apparatus.

### 2. Background Art

Amino acid analysis as a related art is performed by using an ion exchange column in a liquid chromatograph apparatus, by causing an analysis target to react with a ninhydrin reagent to develop a color, and by detecting the color with specific wavelength light (See JP-B-5084428.).

In order to improve measurement accuracy and measurement efficiency, a liquid chromatograph apparatus used for such amino acid analysis is configured to be set measurement conditions (eluent, separation column, detector, and the like) specialized for analysis of an amino acid and related analog.

Meanwhile, a user of the liquid chromatograph apparatus may desire to analyze an organic acid and an amino acid contained in food together. However, the organic acid cannot be analyzed by the liquid chromatograph apparatus dedicated to amino acid analysis because the above-described measurement conditions (eluent, separation column, detector and the like) do not match each other. On the other hand, it is difficult to prepare two liquid chromatograph apparatuses separately in the viewpoint of cost and equipment space. Since measurement work or work for preparing a sample solution is performed by separately moving to each apparatus, workability with the two separated apparatuses is also not excellent.

### SUMMARY

An object of the present disclosure is to provide a liquid chromatograph apparatus being unitary, which enables to measure two or more varieties of measurement samples with high workability.

In order to achieve the above-described object, there is provided a liquid chromatograph apparatus, being unitary, which enables to measure two or more varieties of measurement samples, including:
a single sample solution injection portion configured to inject a sample solution containing the measurement samples;
a single liquid delivering system configured to deliver the injected sample solution;
at least one measurement element out of an eluent tank, a separation column, and a detector, which configures a set of elements separately provided for each of the measurement samples; and
a flow path switching portion configured to selectively connect the liquid delivering system with one element of the measurement element to be capable of delivering the sample solution.

According to the liquid chromatograph apparatus, the sample solution injecting portion and the liquid delivering system are commonized between the measurement samples, it is possible to save space, to improve the workability of the measurement work or preparation of the sample solution, and to separately prepare two or more liquid chromatograph apparatuses with low cost and small space as compared with a case where separated liquid chromatograph apparatuses are prepared.

The liquid chromatograph apparatus of the present disclosure may further include a display control unit configured to display switching information of the flow path switching portion when one of the measurement samples is designated, wherein the switching information corresponds to the designated measurement sample.

According to the liquid chromatograph apparatus, it is possible to prevent a measurer, at low cost, from mistakenly switching the flow path switching portion to make a measurement error.

The liquid chromatograph apparatus of the present disclosure may further includes a power source information acquiring unit configured to acquire power source on/off information of each measurement element,
wherein a display control unit may perform predetermined notification processing in a case where a power source on/off state of each measurement element based on the switching information of the flow path switching portion is different from a power source on/off information acquired by the power source information acquiring unit.

According to the liquid chromatograph apparatus, since the measurer is notified when the measurer mistakenly switches the flow path switching portion, it is possible to reliably prevent measurement error at low cost.

The liquid chromatograph apparatus of the present disclosure may further includes a flow path switching portion driving unit configured to drive the flow path switching portion; and
a driving control unit configured to control the flow path switching portion driving unit to selectively deliver the sample solution between the liquid delivering system and one element of the measurement element when one of the measurement samples is designated, wherein the one element of the measurement element corresponds to the designated measurement sample.

According to the liquid chromatograph apparatus, it is possible to automatically prevent erroneous switching of the flow path switching portion.

In the liquid chromatograph apparatus according to the present disclosure, the two or more varieties of measurement samples may be selected from a group of an amino acid, a sugar, and an organic acid.

According to the present disclosure, there can be provided the unitary liquid chromatograph apparatus that enables to measure two or more varieties of measurement samples with high workability.

### BRIEF DESCRIPTION OF THE DRAWINGS

In the accompanying drawings:
Fig. 1 is a view illustrating a configuration of a liquid chromatograph device according to an embodiment of the present disclosure;
Fig. 2 is a view illustrating a data configuration of switching information of a flow path switching portion for each measurement sample (an amino acid and an organic acid); and
Fig. 3 is a view illustrating a modification example of the flow path switching portion.

### DETAILED DESCRIPTION

Hereinafter, embodiments of the present disclosure will be described with reference to the drawings.

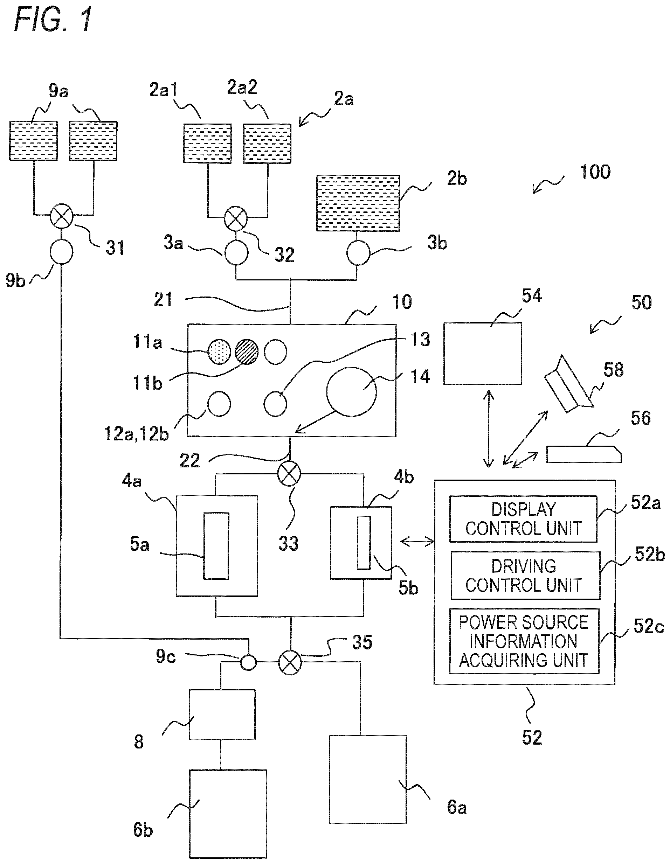

Fig. 1 is a view illustrating a configuration of a liquid chromatograph apparatus 100 according to an embodiment of the present disclosure, specifically, a view in which an amino acid and an organic acid can be analyzed.

The liquid chromatograph apparatus 100 includes a data processing apparatus 50 for controlling the entire apparatus, two eluent tanks 2a and 2b different from each other, liquid delivering pumps 3a and 3b for delivering eluents from each of the eluate tanks 2a and 2b, a reaction liquid tank 9a, a liquid delivering pump 9b for delivering a reaction liquid from the reaction liquid tank 9a, valves 31, 32, 33 and 35, an auto-sampler 10, column ovens 4a and 4b which accommodate separation columns 5a and 5b different from each other, detectors 6a and 6b different from each other, a reaction unit 8, a mixer 9c, and the like.

In addition, the liquid chromatograph apparatus 100 includes a single liquid delivering system (piping) 22 for delivering a sample solution prepared by the auto-sampler 10 to the downstream side. The eluent tanks 2a and 2b, the reaction liquid tank 9a, the separation columns 5a and 5b, the detectors 6a and 6b, the reaction unit 8, and the mixer 9c correspond to the "measurement element" in the claims. The auto-sampler 10 corresponds to the "single sample solution injection portion" in the claims.

In addition, each component which configures the sample solution may be collected and mixed by an auto-sampler to prepare a sample solution. Alternatively, the sample solution may be manually prepared and disposed by an operator in the auto-sampler. In short, the auto-sampler 10 may be configured so as to inject the sample solution into the liquid chromatograph apparatus 100.

The data processing apparatus 50 is, for example, a personal computer, and includes a CPU (Central Control Unit) 52, a storage unit (not illustrated) such as a RAM, a ROM, or a hard disk, a display unit 54 such as a monitor, an input unit 56 such as a keyboard by which instruction of the operator is input, a speaker 58, and the like. In addition, the CPU 52 corresponds to "display control unit", "driving control unit", and "power source information acquiring unit" in the claims.

An amino acid is defined as a measurement sample 11a, and an organic acid is defined as a measurement sample 11b.

In a case where the amino acid is measured by, for example, an NBD-F method (pre-column derivatized amino acid analysis method using "4-Fluoro-7-nitrobenzofurazan (NBD-F)"), after preparing a standard sample 12a of the amino acid, when the operator inputs an instruction to start measurement of the amino acid by the input unit 56, the sampler 10 suctions the standard sample 12a according to a command from the data processing device 50, and together with the eluent of the eluent tank 2a fed from the liquid delivering pump 3a, through the liquid delivering system 22, the amino acid is fed to the separation column 5a in the column oven 4a for amino acids, is separated and developed, and is finally detected by the fluorescence (FL) detector 6a. The chromatogram which is the detection data is stored in the storage unit of the data processing device 50.

In addition, in the NBD-F method, a sample containing a predetermined amount of the amino acid to be measured manually, a reaction buffer solution, and a fluorescent labeling agent solution containing NBD-F are mixed with each other to cause a fluorescent labeling reaction, and after this, the mixture drops a section of the standard sample 12a of the sampler 10.

Before measuring the amino acid, the operator operates the liquid delivering pump 3a ON and the liquid delivering pump 3b OFF so as to selectively deliver the eluent of the eluate tank 2a to the liquid delivering system 22, operates the valve 33 so as to connect the liquid delivering system 22 and the separation column 5a to be capable of selectively delivering the liquid, and operates the valve 35 so as to connect the liquid delivering system 22 and the detector 6a to be capable of selectively delivering the liquid.

Next, the measurement sample 11a is measured in the same manner and is analyzed by comparing the measured data with the data of the standard sample 12a.

In the embodiment, the liquid delivering pumps 3a and 3b are plunger pumps for low pressure gradient, and solenoid valves which interlocks with ON/OFF of the pump are installed in the front stage of the pump head (on the eluent tank side). Therefore, only by turning on the liquid delivering pump 3a and turning off the liquid delivering pump 3b, the liquid delivering system 22 and the eluent tank 2a or the eluent tank 2b are connected to each other via a flow path 21 to be capable of selectively delivering the liquid. Therefore, the liquid delivering pump 3a and 3b correspond to the "flow path switching portion" in the claims.

In addition, the valves 33 and 35 correspond to the "flow path switching portion" in the claims.

The mixed solution in a mixing chamber 14 corresponds to the "sample solution" in the claims.

In the embodiment, a plurality of varieties (eluate tanks 2a1 and 2a2) of the eluate tank 2a are disposed, and the eluent of each of the eluent tank 2a1 and 2a2 can be sequentially fed to the liquid delivering system 22 via the valve 32, or the eluents of each of the liquid tanks 2a1 and 2a2 can be mixed to each other at a predetermined mixing ratio and fed to the liquid delivering system 22. The valve 32 does not correspond to "flow path switching portion" in the claims.

Meanwhile, in a case where the organic acid is measured by, for example, a BTB method (post column derivatized organic acid analysis method using "bromothymol blue (BTB)"), after a standard sample 12b of the organic acid is prepared, when the operator inputs an instruction to start measurement of the organic acid by the input unit 56, the sampler 10 suctions the standard sample 12b and discharges the standard sample 12b into the mixing chamber 14 according to a command from the data processing device 50. In the standard sample 12b, a predetermined amount of the organic acid to be measured is contained. Together with the eluent in the eluate tank 2b fed from the liquid delivering pump 3b, the sample solution in the mixing chamber 14 is fed into the separation column 5b in the column oven 4b for organic acids through the liquid delivering system 22, and is separated and developed, and after this, the sample solution is sent to the mixer 9c.

Meanwhile, a pH indicator (BTB: bromothymol blue solution) in the reaction liquid tank 9a is fed to the mixer 9c by the liquid delivering pump 9b, and is mixed with the standard sample 12b in the mixer 9c, and the acid component is detected by the UV visible light detector 6b. The chromatogram which is the detection data is stored in the storage unit of the data processing device 50.

In addition, since the reaction is fast in the BTB method, it is unnecessary to heat the mixed solution in order to make the mixed solution of the mixer 9c react, is not used in the reaction unit 8 (simply passed through), and is introduced into the UV visible light detector 6b. However, in the ninhydrin method, the sugar analysis method and the like, the mixed solution of the mixer 9c is heated in the reaction unit 8.

Similar to the eluent tank 2a, a plurality of varieties of reaction liquid tanks 9a are disposed, and the reaction liquid in each of the reaction liquid tanks can be selectively fed to the mixer 9c via the valve 31. For example, in the BTB method, one type of reaction liquid is used, but in the ninhydrin method, two varieties of reaction liquids are mixed to each other and used. In a case where the reaction liquid is switched for each of two or more varieties of different measurement samples, the valve 31 corresponds to the "flow path switching portion" in the claims.

Before measuring the amino acid, the operator operates the liquid delivering pump 3a OFF and the liquid delivering pump 3b ON so as to selectively deliver the eluent of the eluate tank 2b to the liquid delivering system 22, operates the valve 33 so as to connect the liquid delivering system 22 and the separation column 5b to each other to be capable of selectively delivering the liquid, and operates the valve 35 so as to connect the liquid delivering system 22 and the reaction unit 8 and the detector 6b to each other to be capable of selectively delivering the liquid.

Next, the measurement sample 11b is measured in the same manner and is analyzed by comparing the measured data with the data of the standard sample 12b.

In the liquid chromatograph apparatus 100 according to the embodiment of the present disclosure, the eluent tank 2a which is necessary for the measurement of the amino acid, the separation column 5a (and the column oven 4a), the detector 6a, and the eluent tank 2b which is necessary for the measurement of the organic acid, the separation column 5b (and the column oven 4b), the reaction unit 8, and the detector 6b are provided in the unitary liquid chromatograph apparatus 100 together, it is possible to respectively analyze an amino acid and an organic acid which are two or more varieties of measurement samples in one apparatus.

In addition, the auto-sampler 10 and the liquid delivering system 22 for delivering the sample solution prepared by the auto-sampler 10 to the downstream side are common.

In addition, the liquid delivering pumps 3a and 3b and the liquid delivering system 22 for selectively delivering the eluent in the eluent tank 2a or the eluent tank 2b to the liquid delivering system 22; the valve 33 which connects the liquid delivering system 22 and the separating column 5a or the separating column 5b to each other to be capable of selectively delivering the liquid; and the valve 35 which connects the liquid delivering system 22 and the detector 6a or the detector 6b to each other to be capable of selectively delivering the liquid, are respectively provided.

As described above, by using the auto-sampler 10 and the liquid delivering system 22 in common, it is possible to save space, to improve workability of the measurement work or preparation of the sample solution, and to measure two or more varieties of measurement samples with lower cost and small space as compared with a case where separated liquid chromatograph apparatuses are prepared.

In addition, although the operator may manually switch the flow path switching portion (liquid delivering pumps 3a and 3b and valves 33 and 35), there is also a concern about making a mistake in switching each of the measurement samples 11a and 11b (an amino acid and an organic acid).

Here, when displaying switching information on the flow path switching portions 3a, 3b, 33, and 35 for each of the measurement samples 11a and 11b (an amino acid and an organic acid) is previously displayed on the display unit 54, it is possible to prevent erroneous switching by the operator.

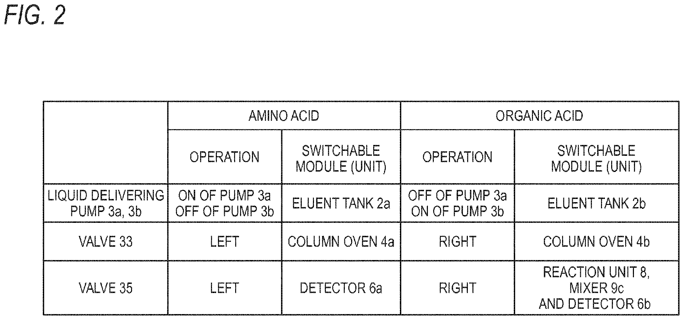

In this case, as illustrated in Fig. 2, switching information (for example, ON/OFF of the liquid delivering pumps 3a and 3b, the switching position of the valves 33 and 35, or the eluent tanks 2a and 2b which are the measurement elements) related to the operation of the flow path switching portions 3a, 3b, 33, and 35 for each of the measurement samples 11a and 11b (an amino acid and an organic acid) is stored in the ROM or the like. In addition, when the operator inputs an instruction to start measurement of the type (for example, an amino acid) of the measurement sample by the input unit 56, the display control unit 52a may perform processing for reading the switching information of the measurement sample and displaying the read switching information on the display unit 54. The read switching information corresponds to the above type of the measurement sample designated by the operator.

In addition, for example, when the switching of the valves 33 and 35 is automatically performed by a servomotor or the like, or the ON/OFF of the liquid delivering pumps 3a and 3b can be automatically performed by electric control, it is unnecessary for the operator to switch the work, and workability is improved. In this case, when the operator inputs an instruction to start measurement of the type (for example, an amino acid) of the measurement sample by the input unit 56, a driving control unit 52b reads the switching information of the measurement sample, and by controlling the servomotor or by electrically controlling ON/OFF of the liquid delivering pumps 3a and 3b, automatic switching of flow path switching portions 3a, 3b, 33 and 35 becomes possible. The read switching information corresponds to the above type of the measurement sample designated by the operator.

In addition, the servo motor or pulse motor, the electronic circuit for controlling ON/OFF of the liquid delivering pumps 3a and 3b, the microcomputer or the like correspond to the "flow path switching portion driving unit" in the claims.

However, the servo motor and the like are expensive, and there are cases where installation thereof is difficult. Therefore, when the power source information acquiring unit 52c acquires power source on/off information for each of the measurement elements, and the display control unit 52a performs the notification processing in a case where the flow path switching portions 3a, 3b, 33 and 35 are mistakenly switched, it is possible to prevent erroneous measurement at low cost.

Here, the power source on/off information for each of the measurement elements can be easily acquired when monitoring ON/OFF of a power source of the liquid delivering pumps 3a and 3b, a power source of a heater of the column ovens 4a and 4b which accommodate the separation columns 5a and 5b, and a power source of the detectors 6a and 6b.

When the operator selects a measurement component target, the display control unit 52a can guide-display the device configuration conforming to the analysis method, measurement conditions, such as columns and detectors. According to the guide-display, the operator can switch the connection.

In addition, in a case where the power source on/off state of the measurement element based on the switching information in Fig. 2 is different from the power source on/off information acquired by the power source information acquiring unit 52c, the display control unit 52a performs a predetermined notification processing.

For example, in a case where the operator inputs an instruction to start measurement of an amino acid by the input unit 56, the liquid delivering pump 3a is switched (the power source of the pump is ON) according to Fig. 2, but when the power source of the liquid delivering pump 3b is ON, it can be detected that the flow path switching portion is mistakenly switched. Here, the display control unit 52a can perform notification processing to the operator by making a sound to sound from the speaker 58 or a display for calling attention to the display unit 54.

The present disclosure is not limited to the above-described embodiment, but it is also needless to say that the present disclosure also extends to various modifications and equivalents included in the spirit and scope of the present disclosure.

The measurement sample is not limited, and examples thereof include an amino acid, an organic acid, a sugar, vitamins, a cyan compound, and a carbamate pesticide. As the measuring element, in addition to the eluent tank, the separation column, and the detector, the above-described reaction unit can be employed. In a case of amino acid analysis, a reaction reagent (ninhydrin) can be used, and in the NBD-F method, a fluorescent labeling agent solution can be used.

The method for measuring each of the measurement samples is also not limited. For example, the ninhydrin method (ninhydrin post column derivatized amino acid analysis method) can also be used for amino acid analysis. In this case, there are five eluent tanks 2a, and five varieties of eluents are used. In the ninhydrin method, the reaction unit 8 is used.

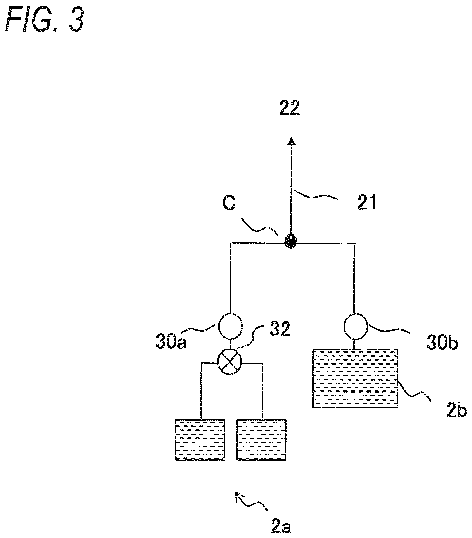

The flow path switching portion is not limited to the above-described liquid delivering pump or valves as long as the configuration and function in which the flow path is switched. For example, as illustrated in Fig. 3, in a case where the liquid delivering pumps 30a and 30b are disposed above the eluent tanks 2a and 2b so as to suction each of the eluents, even when the liquid delivering pumps 30a and 30b do not incorporate valves therein, the liquid delivering pumps 30a and 30b functions as the "flow path switching portion" in the claims. For example, when the liquid delivering pump 30a is ON and the liquid delivering pump 30b is OFF, through the liquid delivering pump 30b from the eluent tank 2b, the eluent until a part C at which each of the liquid delivering pumps 30a and 30b gathers in the flow path 21 returns to the liquid tank 2b by gravity, and only the eluent in the eluate tank 2a is fed to the liquid delivering system 22 via the flow path 21 by the liquid delivering pump 30a.

However, in a case of a liquid delivering pump that does not include a solenoid valve, such as a plunger pump for a high pressure gradient, therein, and in a case where the gravity is not used as illustrated in Fig. 3, valves are respectively disposed at the front stage or the rear stage of the liquid delivering pump, or one valve is disposed at the site C at which each of the liquid delivering pump gathers in the flow path 21. In this case, the valve corresponds to the "flow path switching portion" in the claims.

As described above, the "flow path switching portion" means a member which switches a flow path in accordance with an operation from the outside (including manually switching the valve in addition to automatic operation, such as turning on the power source of the pump and switching the valve by the servo motor).

## Claims

1. A liquid chromatograph apparatus being unitary, which enables to measure two or more varieties of measurement samples, comprising:
a single sample solution injection portion configured to inject a sample solution containing the measurement samples;
a single liquid delivering system configured to deliver the injected sample solution;
at least one measurement element out of an eluent tank, a separation column, and a detector, which configures a set of elements separately provided for each of the measurement samples; and
a flow path switching portion configured to selectively connect the liquid delivering system with one element of the measurement element to be capable of delivering the sample solution.

2. The liquid chromatograph apparatus according to claim 1, further comprising:
a display control unit configured to display switching information of the flow path switching portion when one of the measurement samples is designated, wherein the switching information corresponds to the designated measurement sample.

3. The liquid chromatograph apparatus according to claim 2, further comprising:
a power source information acquiring unit configured to acquire power source on/off information of each measurement element,
wherein the display control unit performs predetermined notification processing in a case where a power source on/off state of each measurement element based on the switching information of the flow path switching portion is different from a power source on/off information acquired by the power source information acquiring unit.

4. The liquid chromatograph apparatus according to claim 1, further comprising:
a flow path switching portion driving unit configured to drive the flow path switching portion; and
a driving control unit configured to control the flow path switching portion driving unit to selectively deliver the sample solution between the liquid delivering system and one element of the measurement element when one of the measurement samples is designated, wherein the one element of the measurement element corresponds to the designated measurement sample.

5. The liquid chromatograph apparatus according to any one of claims 1 to 4,
wherein the two or more varieties of measurement samples are selected from a group of an amino acid, a sugar, and an organic acid.
